# FASCICULE DE BREVET EUROPEEN

(11) **EP 0 635 543 B1**
(45) Date de publication et mention de la délivrance du brevet: **12.12.2001**
(21) Numéro de dépôt: 94201754.2
(22) Date de dépôt: 20.06.1994
(51) Int. Cl.: C08L 23/02

(54) **Composition à base d'un polymère oléfinique et objet façonné à partir de cette composition**
Polyolefin Polymerzusammensetzung und daraus gefertigter Gegenstand
Polyolefin polymer composition and article made thereof

(30) Priorité: 24.06.1993 BE 9300654
(43) Date de publication de la demande: 25.01.1995
(73) Titulaire: SOLVAY POLYOLEFINS EUROPE - BELGIUM (Société Anonyme), 1050 Bruxelles (BE)
(72) Inventeur: Gorgerin, Michel, B-7433 Jurbise (BE)
(74) Mandataire: Destryker, Elise Martine

(56) Documents cités:
- EP-A- 0 004 647
- EP-A- 0 158 140

## Description

La présente invention concerne une composition à base d'un polymère oléfinique, en particulier une telle composition comprenant en outre une silicone. Elle concerne également des objets façonnés à partir de cette composition.

Il est généralement connu, pour faciliter la mise en oeuvre des polymères oléfiniques tels que le polypropylène ou le polyéthylène, d'y incorporer un ou plusieurs additifs tels qu'un polymère fluoré (par exemple le polyfluorure de vinylidène), ou une silicone. A cet effet, on a déjà proposé dans le brevet EP-0158140 de préparer des films par extrusion à partir d'un polymère oléfinique additionné d'une silicone; les films ainsi obtenus présentent des propriétés mécaniques et optiques améliorées.

On a maintenant constaté que certaines de ces compositions connues ne permettent pas de fabriquer des objets ayant une surface brillante.

L'invention remédie à cet inconvénient en fournissant une composition nouvelle présentant de bonnes propriétés de mise en oeuvre et permettant la fabrication d'objets brillants. Un autre objectif de la présente invention est de fournir une composition utilisable pour la fabrication d'emballages alimentaires.

En conséquence, la présente invention concerne une composition comprenant au moins un polymère oléfinique présentant une distribution des masses moléculaires définie par un rapport M_{w}/Mₙ de 5 à 12 et une masse volumique standard de 0,920 à 0,970 g/cm³ et de 0,08 à 10 % en poids du poids du polymère oléfinique d'au moins une silicone présentant une viscosité cinématique mesurée à 25°C de 5.10⁻⁴ à 300 m²/s [de 500 à 300.000.000 cSt].

Le rapport M_{w}/Mₙ désigne le rapport entre la masse moléculaire moyenne en poids (M_{w}) du polymère oléfinique et la masse moléculaire moyenne en nombre (Mₙ) du polymère oléfinique.

Le rapport M_{w}/Mₙ est mesuré par chromatographie d'exclusion stérique réalisée dans le 1,2,4-trichlorobenzène à 135 °C sur un chromatographe de la société WATERS du type 150 C.

La composition selon l'invention comprend au moins un polymère oléfinique. Le polymère oléfinique peut être choisi parmi les homopolymères dérivés d'une oléfine, obtenus par tous moyens connus adéquats. On utilise de préférence les polymères dérivés des oléfines. Des exemples d'oléfines utilisables conformément à l'invention sont celles qui contiennent jusqu'à 20 atomes de carbone, avantageusement de 2 à 12 atomes de carbone par molécule, par exemple l'éthylène, le propylène, le 1-butène, le 1-pentène, le 3-méthyl-1-butène, le 1-hexène, les 3- et 4-méthyl-1-pentènes, le 1-octène, le 3-éthyl-1-butène, le 1-heptène, le 3,4-diméthyl-1-hexène, le 4-butyl-1-octène, le 5-éthyl-1-décène et le 3,3-diméthyl-1-butène. Les polymères oléfiniques préférés sont le polyéthylène et le polypropylène. Il va de soi que la composition selon l'invention peut comprendre simultanément plusieurs homopolymères.

Le polymère oléfinique de la composition selon l'invention peut être aussi un copolymère d'une oléfine telle que définie ci-dessus avec au moins un comonomère oléfiniquement insaturé. Des exemples de comonomères oléfiniquement insaturés utilisables conformément à l'invention sont les oléfines substituées ou non substituées, comprenant jusqu'à 8 atomes de carbone, tels que le 1-butène, le 1-pentène, le 3-méthyl-1-butène, le 1-hexène, les 3-et 4-méthyl-1-pentènes et le 1-octène, et les dioléfines comprenant de 4 à 18 atomes de carbone. Les copolymères particulièrement recommandés sont ceux de l'éthylène et/ou du propylène. Les comonomères de l'éthylène sont le plus souvent choisis parmi le propylène, le 1-butène, le 1-hexène et le 1-octène. Les comonomères préférés du propylène sont l'éthylène, le 1-butène, le 1-hexène et le 1-octène. La composition selon l'invention peut bien entendu contenir simultanément plusieurs copolymères tels que définis plus haut.

Les polymères oléfiniques particulièrement préférés sont les homopolymères et les copolymères de l'éthylène.

La composition selon l'invention peut également comprendre simultanément un ou plusieurs homopolymères et un ou plusieurs copolymères tels que décrits ci-dessus.

Les polymères oléfiniques ayant conduit à des résultats satisfaisants sont ceux qui présentent une masse volumique standard au moins égale à 0,920 g/cm³, de préférence à 0,930 g/cm³ et inférieure ou égale à 0,970 g/cm³, par exemple à 0,965 g/cm³. Les masses volumiques standard préférées sont de 0,935 à 0,955 g/cm³.

Les polymères oléfiniques présentent en général un indice de fluidité mesuré à 190°C sous une charge de 2,16 kg selon la norme ASTM D 1238 (1986) d'au moins 0,05 g/10 min., en particulier d'au moins 0,1 g/10 min., les valeurs d'au moins 0,2 g/10 min. étant les plus avantageuses. L'indice de fluidité ne dépasse en général pas 10 g/10 min., est plus spécialement d'au plus 5 g/10 min., les valeurs d'au plus 1 g/10 min. (par exemple environ 0,5 g/10 min.) étant recommandées.

Une des caractéristiques essentielles de la présente invention est le caractère étroit de la distribution des masses moléculaires du polymère oléfinique, définie par un rapport M_{w}/Mₙ inférieur ou égal à 12, préférentiellement à 10 et supérieur ou égal à 5. Les rapports M_{w}/Mₙ d'environ 8 conviennent bien.

La composition selon l'invention comprend en outre une silicone. La silicone utilisable peut par exemple être choisie parmi les macromolécules constituées de motifs de formule générale : 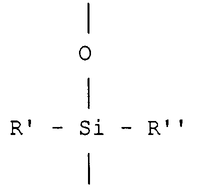 dans laquelle R' et R'' représentent chacun un groupement hydrocarboné, qui peut être linéaire ou cyclique, saturé ou insaturé, aromatique ou aliphatique, non substitué ou substitué partiellement ou totalement, et qui peut éventuellement comprendre un autre élément tel que l'oxygène ou l'azote. Les groupements hydrocarbonés spécialement recommandés sont les alkyles aliphatiques, linéaires, saturés. On peut citer comme exemple le méthyle, le n-propyle, l'isopropyle, le n-butyle, le t-butyle, le pentyle et l'hexyle. Les macromolécules peuvent bien entendu être constituées de plusieurs motifs différents. Des exemples typiques de silicone ayant conduit à des résultats satisfaisants sont le polydiméthylsiloxane et les silicones qui répondent à la formule suivante : 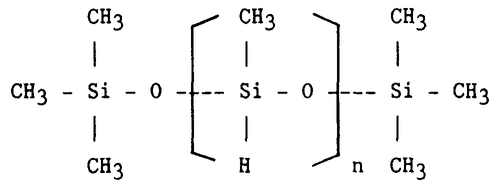 n étant un nombre entier au moins égal à 5, sans excéder 200, par exemple égal à 40.

Des silicones particulièrement préférées sont celles représentées par la formule générale : 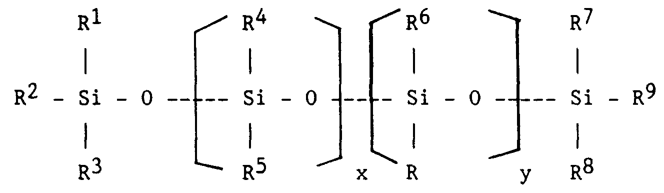 dans laquelle :
- R¹, R², R³, R⁴, R⁵, R⁶, R⁷, R⁸ et R⁹ représentent chacun un radical alkyle
- R représente un radical hydrocarboné contenant au moins un groupe époxy ou un groupe amino tertiaire
- x ≥ 1 et y ≥ 1.

Les valeurs de x et y sont fonction de la viscosité de la silicone. En général, x et y ne dépassent pas 200.

On utilise de préférence des silicones telles que définies ci-dessus dans lesquelles les groupes R¹, R², R³, R⁴, R⁵, R⁶, R⁷, R⁸ et R⁹ sont des radicaux alkyle contenant jusqu'à 6 atomes de carbone. Spécialement avantageux sont les dérivés du polydiméthylsiloxane, dans lesquels les groupes R¹, R², R³, R⁴, R⁵, R⁶, R⁷, R⁸ et R⁹ sont des groupes méthyle.

La silicone présente dans la composition selon l'invention peut par exemple être préparée selon la méthode décrite dans le brevet EP-0158140.

Des silicones préférées sont celles qui présentent une viscosité au moins égale à 10⁻³ m²/s [1000 centistokes], les valeurs au moins égales à 3.10⁻² m²/s [30.000 centistokes] étant les plus avantageuses, les viscosités inférieures ou égales à 100 m²/s [100.000.000 centistokes] étant toutefois recommandées. Spécialement préférées sont les valeurs de 5.10⁻⁴ à 10 m²/s [de 500 à 10.000.000 centistokes]. On obtient des résultats particulièrement satisfaisants avec une silicone de viscosité de 10⁻³ à 2 m²/s [de 1000 à 2.000.000 centistokes]. Par viscosité, on entend désigner la viscosité cinématique mesurée à 25 °C.

Dans la composition suivant l'invention, la quantité optimum de silicone mélangée au polymère oléfinique dépend de la viscosité de la silicone et de la brillance recherchée. En effet, la quantité minimale requise d'une silicone peu visqueuse pour obtenir des surfaces brillantes tout en gardant de bonnes propriétés de mise en oeuvre, est supérieure à celle nécessaire dans le cas d'une silicone très visqueuse. La quantité pondérale de silicone mise en oeuvre est supérieure ou égale à 0,08 % du poids du polymère oléfinique, en particulier au moins égale à 0,2 % en poids du polymère oléfinique; elle est inférieure ou égale à 10 %, de ce poids. Les valeurs au maximum égales à 2 % du poids du polymère oléfinique, par exemple 1 %, sont les plus avantageuses. Il va de soi que la composition selon l'invention peut comprendre une silicone unique ou un mélange de silicones.

Outre le polymère oléfinique et la silicone, la composition selon l'invention peut également contenir des additifs usuels tels que des stabilisants (par exemple des anti-acides, des anti-oxydants et/ou des anti-UV), des colorants organiques ou minéraux (tels que par exemple l'oxyde de titane ou de fer) ou des agents antistatiques. La teneur en ces divers additifs est en général inférieure à 10 parties en poids pour 100 parties en poids de polymère oléfinique.

La préparation de la composition selon l'invention peut se faire par toutes les méthodes connues de la technique. Un mode opératoire particulièrement simple comprend le mélange à sec dans les proportions souhaitées des différents constituants, par exemple dans un mélangeur mécanique.

On peut aussi préparer, dans un premier temps, un mélange primaire, appelé mélange maître, comprenant une fraction du polymère oléfinique, la silicone et, éventuellement, des additifs tels que définis plus haut, ce mélange maître étant riche en silicone. La teneur en silicone dans ce mélange maître est en général comprise entre 0,05 et 50 % en poids, de préférence entre 0,5 et 40 % en poids, plus particulièrement entre 1 et 30 % en poids du mélange. Spécialement préférés sont les mélanges comprenant de 2 à 25 % en poids de silicone. Ce mélange maître est ensuite mélangé à la fraction restante du polymère oléfinique lors de la fabrication d'un objet façonné, pour obtenir alors la composition selon l'invention.

Dans le procédé qui vient d'être décrit, on peut éventuellement chauffer la silicone et la mélanger à l'état liquide avec le polymère oléfinique, qui se présente généralement sous la forme d'une poudre.

Les proportions entre les différents constituants de la composition selon l'invention peuvent éventuellement être modifiées au cours de la mise en oeuvre.

La composition selon l'invention est apte à être mise en oeuvre dans tous les procédés classiques de fabrication d'objets en matière plastique et plus particulièrement dans les procédés d'extrusion, d'extrusion-soufflage, d'extrusion-thermoformage et d'injection. Elle convient pour la fabrication d'objets façonnés dont la surface présente une brillance améliorée, tels que des films, des feuilles, des plaques, des récipients, des sacs, des sachets ou des tubes. Vu ses propriétés non toxiques, la composition selon l'invention convient particulièrement bien pour la fabrication d'objets façonnés destinés à l'emballage des boissons et des denrées alimentaires, tels que des récipients, des films et des feuilles.

Dès lors, la présente invention concerne également les objets façonnés à partir de la composition selon l'invention, en particulier ceux obtenus par extrusion, extrusion-soufflage, extrusion-thermoformage ou injection, par exemple les objets utilisés comme emballage alimentaire.

Un avantage inattendu des objets façonnés selon l'invention est leur surface brillante. En outre, les objets façonnés selon l'invention présentent une surface lisse, exempte d'imperfections optiques, et possèdent un indice de blancheur élevé.

Les exemples dont la description suit, servent à illustrer l'invention. Dans ces exemples, on a préparé des compositions à base de polyéthylène conformes à l'invention, à partir desquelles on a ensuite fabriqué des flacons. La signification des symboles utilisés dans ces exemples, les unités exprimant les grandeurs mentionnées et les méthodes de mesure de ces grandeurs sont explicitées ci-dessous.
- M_{w}/Mₙ =: rapport entre la masse moléculaire moyenne en poids (M_{w}) du polyéthylène et la masse moléculaire moyenne en nombre (Mₙ) du polyéthylène, mesuré par chromatographie d'exclusion stérique réalisée dans le 1,2,4-trichlorobenzène à 135°C sur un chromatographe de la société WATERS de type 150 C.
- MVS =: masse volumique standard du polyéthylène, exprimée en g/cm³, mesurée selon la norme ISO 1183 (1987).
- MI =: indice de fluidité du polyéthylène, exprimé en g/10 min, mesuré à 190°C sous une charge de 2,16 kg selon la norme ASTM D 1238 (1986).

### Exemple 1 (conforme à l'invention)

On a préparé un mélange-maître dans un mélangeur rotatif (pendant environ 7 min et à une vitesse de rotation de 720 t/min) à température ambiante, comprenant :
- 94,87 % en poids de polyéthylène (contenant 0,6 % en poids de butène) présentant un M_{w}/Mₙ de 10,4, une MVS de 0,952 g/cm³ et un MI de 0,6 g/10 min,
- 5 % en poids de silicone BAYSILON®,
- 0,04 % en poids de stabilisant [stéaryl bèta-(3,5-di-t-butyl-4-hydroxyphényl)-propionate],
- 0,04 % en poids de stabilisant [bis(2,4-di-t-butyl)pentaérythritol diphosphite],
- 0,05 % en poids de stabilisant (hydrotalcite).

Le mélange-maître a ensuite été granulé dans une extrudeuse à 190 °C. Les granules ainsi obtenus ont été mélangés dans un mélangeur rotatif (pendant environ 7 min et à une vitesse de rotation de 420 t/min) à température ambiante avec le polyéthylène défini ci-dessus de manière à obtenir une composition comprenant 0,1 % en poids de la silicone, et avec les stabilisants précités de manière à maintenir leur concentration respectivement à 0,04 % en poids, 0,04 % en poids et 0,05 % en poids. Puis, on a fabriqué par extrusion-soufflage des flacons d'un litre. On a constaté que ces flacons avaient une surface brillante.

### Exemple 2 (conforme à l'invention)

On a répété les opérations de l'exemple 1 avec un polyéthylène (contenant 0,6 % en poids de butène) présentant un M_{w}/Mₙ de 6,8, une MVS de 0,936 g/cm³ et un MI de 0,6 g/10 min.

Les flacons obtenus présentaient une surface brillante.

## Revendications

1. Composition comprenant au moins un polymère oléfinique présentant une distribution des masses moléculaires définie par un rapport M_{w}/Mₙ de 5 à 12 et une masse volumique standard de 0,920 à 0,970 g/cm³ et de 0,08 à 10 % en poids du poids du polymère oléfinique d'au moins une silicone présentant une viscosité cinématique mesurée à 25°C de 5.10⁻⁴ à 300 m²/s [de 500 à 300.000.000 cSt].

2. Composition selon la revendication 1, **caractérisée en ce que** le polymère oléfinique est un homopolymère ou un copolymère de l'éthylène.

3. Composition selon la revendication 1 ou 2, **caractérisée en ce que** le polymère oléfinique présente une masse volumique standard de 0,930 à 0,965 g/cm³.

4. Composition selon l'une quelconque des revendications 1 à 3, **caractérisée en ce qu'**elle présente une teneur en silicone au moins égale à 0,2 % et au maximum égale à 2 % en poids.

5. Composition selon l'une quelconque des revendications 1 à 4, **caractérisé en ce que** la silicone présente une viscosité de 10⁻³ à 100 m²/s [de 1000 à 100.000.000 cSt].

6. Composition selon l'une quelconque des revendications 1 à 5, **caractérisée en ce que** la silicone répond à la formule générale 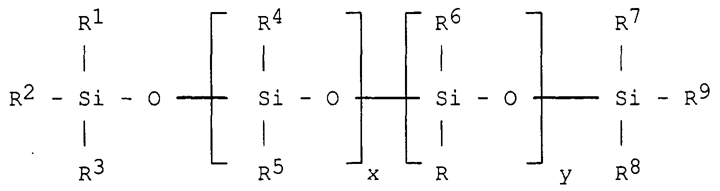 dans laquelle :
- R¹, R², R³, R⁴, R⁵, R⁶, R⁷, R⁸ et R⁹ représentent chacun un radical alkyle
- R représente un radical hydrocarboné contenant au moins un groupe époxy ou un groupe amino tertiaire
- x ≥ 1 et y ≥ 1.

7. Composition selon la revendication 6, **caractérisée en ce que** les groupes alkyle R¹, R², R³, R⁴, R⁵, R⁶, R⁷, R⁸ et R⁹ sont des groupes méthyle.

8. Objet façonné obtenu à partir de la composition conforme à l'une quelconque des revendications 1 à 7.

9. Objet selon la revendication 8, **caractérisé en ce qu'**il est obtenu par extrusion, extrusion-soufflage, extrusion-thermoformage ou injection.

10. Utilisation d'un objet selon la revendication 8 ou 9 comme emballage alimentaire.

## Patentansprüche

1. Zusammensetzung, die wenigstens ein Olefinpolymer umfasst, das eine Molekülmassenverteilung, definiert durch ein Verhältnis M_{w}/Mₙ, von 5 bis 12 und eine Standarddichte von 0,920 bis 0,970 g/cm³ und 0,08 bis 10 Gew.-% des Olefinpolymergewichts an wenigstens einem Silicon aufweist, das eine kinematische Viskosität, gemessen bei 25 °C, von 5.10⁻⁴ bis 300 m²/s [500 bis 300.000.000 cSt] aufweist.

2. Zusammensetzung gemäß Anspruch 1, **dadurch gekennzeichnet, dass** das Olefinpolymer ein Ethylen-Homopolymer oder -Copolymer ist.

3. Zusammensetzung gemäß Anspruch 1 oder 2, **dadurch gekennzeichnet, dass** das Olefinpolymer eine Standarddichte von 0,930 bis 0,965 g/cm³ aufweist.

4. Zusammensetzung gemäß einem der Ansprüche 1 bis 3, **dadurch gekennzeichnet, dass** sie einen Gehalt an Silicon von wenigstens gleich 0,2 Gew.-% und höchstens gleich 2 Gew.-% aufweist.

5. Zusammensetzung gemäß einem der Ansprüche 1 bis 4, **dadurch gekennzeichnet, dass** das Silicon eine Viskosität von 10⁻³ bis 100 m²/s [1000 bis 100.000.000 cSt] aufweist.

6. Zusammensetzung gemäß einem der Ansprüche 1 bis 5, **dadurch gekennzeichnet, dass** das Silicon der allgemeinen Formel 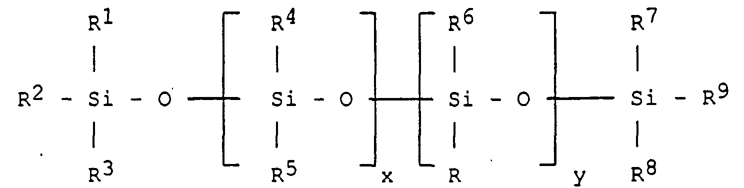 entspricht, in der
- R¹, R², R³, R⁴, R⁵, R⁶, R⁷, R⁸ und R⁹ jeweils einen Alkylrest darstellen,
- R einen Kohlenwasserstoffrest mit wenigstens einer Epoxygruppe oder einer tertiären Aminogruppe darstellt,
- x ≥ 1 und y ≥ 1.

7. Zusammensetzung gemäß Anspruch 6, **dadurch gekennzeichnet, dass** die Alkylgruppen R¹, R², R³, R⁴, R⁵, R⁶, R⁷, R⁸ und R⁹ Methylgruppen sind.

8. Formgegenstand, der aus der Zusammensetzung gemäß einem der Ansprüche 1 bis 7 erhalten wurde.

9. Gegenstand gemäß Anspruch 8, **dadurch gekennzeichnet, dass** er durch Extrusion, Extrusionsblasformen, Extrusionswarmformen oder Spritzen erhalten wird.

10. Verwendung eines Gegenstands gemäß Anspruch 8 oder 9 als Lebensmittelverpackung.

## Claims

1. Composition comprising at least one olefinic polymer which has a molecular mass distribution defined by a ratio M_{w}/Mₙ of from 5 to 12 and a standard density of from 0.920 to 0.970 g/cm³ and from 0.08 to 10% by weight of the weight of the olefinic polymer of at least one silicone which has a kinematic viscosity, measured at 25°C, of from 5.10⁻⁴ to 300 m²/s [from 500 to 300,000,000 cSt].

2. Composition according to Claim 1, **characterized in that** the olefinic polymer is a homopolymer or a copolymer of ethylene.

3. Composition according to Claim 1 or 2, **characterized in that** the olefinic polymer has a standard density of from 0.930 to 0.965 g/cm³.

4. Composition according to any one of Claims 1 to 3, **characterized in that** it has a silicone content of at least 0.2% and of not more than 2% by weight.

5. Composition according to any one of Claims 1 to 4, **characterized in that** the silicone has a viscosity of from 10⁻³ to 100 m²/s [from 1000 to 100,000,000 cSt].

6. Composition according to any one of Claims 1 to 5, **characterized in that** the silicone complies with the general formula 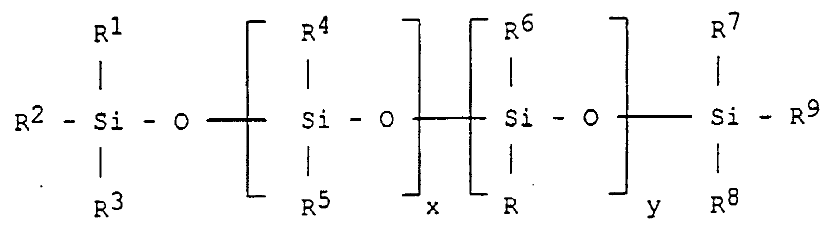 in which:
- each of R¹, R², R³, R⁴, R⁵, R⁶, R⁷, R⁸ and R⁹ represents an alkyl radical
- R represents a hydrocarbon radical containing at least one epoxy group or a tertiary amino group
- x ≥ 1 and y ≥ 1.

7. Composition according to Claim 6, **characterized in that** the alkyl groups R¹, R², R³, R⁴, R⁵, R⁶, R⁷, R⁸ and R⁹ are methyl groups.

8. Shaped item obtained from the composition according to any of Claims 1 to 7.

9. Item according to Claim 8, **characterized in that** it is obtained by extrusion, extrusion-blow moulding, extrusion-forming or injection moulding.

10. Use of an item according to Claim 8 or 9 as food packaging.
